# EUROPÄISCHE PATENTANMELDUNG

(11) **EP 4 257 766 A1**
(43) Veröffentlichungstag der Anmeldung: **11.10.2023**
(21) Anmeldenummer: 23164154.9
(22) Anmeldetag: 24.03.2023
(51) Int. Cl.: E04B 1/41

(54) **ANKEREINHEIT, BAUWERKSEINRICHTUNG UND VERFAHREN ZUM HERSTELLEN EINER BAUWERKSEINRICHTUNG**

(30) Priorität: 04.04.2022 DE 102022107996
(71) Anmelder: Hager, Henning, 64665 Alsbach-Hähnlein Hessen (DE); Hiesch, Dominik, 64832 Babenhausen Hessen (DE)
(72) Erfinder: Hager, Henning, 64665 Alsbach-Hähnlein (DE)
(74) Vertreter: Schorr, Peter Karl

(57) **Zusammenfassung**

Die Erfindung betrifft eine Ankereinheit (8), die in einer Bauwerkseinrichtung (2), wie Decke, in Gänze oder zumindest abschnittweise in einem aus einer Vergussmasse, wie Beton, hergestellten Bauwerkselement (4) der Bauwerkseinrichtung (2) unlösbar form- und/oder kraftschlüssig festlegbar oder festgelegt ist, mit mindestens einem Ankerkopf (10), der mindestens eine von außen zugängliche Aufnahme (12) umfasst, in die ein Festlegemittel einführbar und darin festlegebar ist, und mit mindestens einem stab- oder drahtförmigen Verankerungselement (14), das am Ankerkopf (10) festgelegt ist, das entlang seiner Längsrichtung unelastisch und quer zu seiner Längsrichtung flexibel biegbar ist, wobei der Ankerkopf (10) im unlösbar angeordneten Zustand zwischen einer freien Oberfläche (18) des Bauwerkselements (4) und mindestens einem im Bauwerkselement (4) angeordneten Bewehrungsmittel (6) angeordnet und die Aufnahme (12) von außen frei zugänglich ist.

## Beschreibung

Die Erfindung betrifft eine Ankereinheit, eine Bauwerkseinrichtung mit einer derartigen Ankereinheit und ein Verfahren zum Herstellen einer derartigen Bauwerkseinrichtung.

Bei der Herstellung von Gebäuden ist es bekannt, Bauwerkseinrichtungen, wie beispielsweise eine Decke, aus einer Vergussmasse, wie Beton, herzustellen. Hierbei können in dem aus der Vergussmasse hergestellten Bauwerkselement Bewehrungsmittel angeordnet sein.

Aus dem Stand der Technik ist es bekannt, an einer Decke Funktionselemente, wie Leitungen oder Lüftungsanlagen festzulegen. Hierzu werden in der als Decke ausgebildeten Bauwerkseinrichtung mittels Bohrungen Aufnahmen geschaffen, in denen die Funktionselemente festgelegt werden können. Hierbei hat es sich als nachteilig und umständlich erwiesen, dass eine zuvor durch Aushärten eines Vergussmaterials geschaffene Bauwerkseinrichtung durch ein materialentfernendes Bearbeiten, wie Bohren, bearbeitet werden muss.

Aus dem Stand der Technik ist es bekannt, Ankereinheiten beim Herstellen einer Betondecke an einer Verschalung anzuordnen und an einem oder an mehreren Bewehrungsmitteln festzulegen. Dieses erweist sich als zeitaufwändig und umständlich.

Aufgabe eines Ausführungsbeispiels der Erfindung ist, eine Ankereinheit, eine Bauwerkseinrichtung mit einer derartigen Ankereinheit sowie ein Verfahren zum Herstellen einer derartigen Bauwerkseinrichtung vorzuschlagen, die zeitsparend und lageunabhängig platzierbar und in der Bauwerkseinrichtung unlösbar festlegbar ist.

Diese Aufgabe wird gelöst durch eine Ankereinheit, die in einer Bauwerkseinrichtung, wie Decke, in Gänze oder zumindest abschnittweise in einem aus einer Vergussmasse, wie Beton, hergestellten Bauwerkselement der Bauwerkseinrichtung unlösbar form- und/oder kraftschlüssig festlegbar oder festgelegt ist, mit mindestens einem Ankerkopf, der mindestens eine von außen zugängliche Aufnahme umfasst, in die ein Festlegemittel einführbar und darin festlegbar ist, und mit mindestens einem stab- oder drahtförmigen Verankerungselement, das am Ankerkopf festgelegt ist, das entlang seiner Längsrichtung unelastisch und quer zu seiner Längsrichtung flexibel biegbar ist, wobei der Ankerkopf im unlösbar angeordneten Zustand zwischen einer freien Oberfläche des Bauwerkselements und mindestens einem im Bauwerkselement angeordneten Bewehrungsmittel angeordnet und die Aufnahme von außen frei zugänglich ist.

Dadurch, dass die Ankereinheit einen Ankerkopf umfasst, der zwischen einer freien Oberfläche des Bauwerkselements und mindestens einem im Bauwerkselement angeordneten Bewehrungsmittel angeordnet ist, kann die Ankereinheit an einer beliebigen Stelle der Bauwerkseinrichtung angeordnet werden, ohne dass der Ankerkopf beim Anordnen mit dem Bewehrungsmittel kollidiert.

Dadurch, dass die Ankereinheit mindestens ein am Ankerkopf festgelegtes Verankerungselement umfasst, das entlang seiner Längsrichtung unelastisch und quer zu seiner Längsrichtung flexibel biegbar ist, kann die Lastaufnahme der Ankereinheit erhöht werden und das Verankerungselement derart flexibel gebogen werden, dass es beispielsweise um das Bewehrungsmittel herumgeführt anordenbar ist.

Hierdurch ist die Ankereinheit trotz Vorsehen von Verankerungselementen an einem beliebigen Ort der Bauwerkseinrichtung anordenbar und der Zeitbedarf, um die Ankereinheit anzuordnen, reduziert.

Die Biegbarkeit der Verankerungselemente verhindert darüber hinaus ein Loslösen des Ankerkopfes von dessen Befestigungsfläche bei einem Einwirken von Kräften, wie äußeren Belastungen in Folge eines Einfüllens der Vergussmasse, insbesondere eines Betoniervorgangs. Derartige Kräfte können beispielsweise beim unbeabsichtigten Anstoßen einer Rüttelflasche übertragen werden.

Das Verankerungselement ist entlang seiner Längsrichtung unelastisch und unterstützt daher den Ankerkopf lastaufnehmend.

Ankerkopf und Verankerungselement können jeweils form- oder kraftschlüssig im Bauwerkselement unlösbar festgelegt sein.

Mindestens eines des mindestens einen Verankerungselements kann auf einer der Aufnahme abgewandten Seite des Ankerkopfs festgelegt sein. Alternativ hierzu oder ergänzend, kann mindestens eines des mindestens einen Verankerungselements auf einer quer oder schräg zur die Aufnahme umfassenden Oberfläche verlaufenden Seitenfläche des Ankerkopfs festgelegt sein.

Wenn die Ankereinheit im Bauwerkselement der Bauwerkseinrichtung unlösbar form- und/oder kraftschlüssig festlegbar oder festgelegt ist, ist die Ankereinheit beispielsweise durch die Vergussmasse umgossen und die Vergussmasse ausgehärtet.

Das mindestens eine Verankerungselement kann quer zu seiner Längsrichtung flexibel ausgebildet sein. Solchenfalls kann es beispielsweise bei dem Einfüllen von Vergussmasse zum Herstellen des Bauwerkselements durch die Vergussmasse verdrängt und bezüglich seiner Anordnung verschoben werden. Wenn mehrere Verankerungselemente vorgesehen sind, kann solchenfalls die Ankereinheit mit der Mehrzahl von Verankerungselementen wurzelartig in dem Bauwerkselement angeordnet sein.

Es erweist sich bei einer Ausführungsform der Ankereinheit als vorteilhaft, wenn mindestens eines des mindestens einen Verankerungselements bei Überschreiten einer bestimmten Kraft quer zu seiner Längsrichtung flexibel biegbar und in einer Mehrzahl von gebogenen Anordnungen, insbesondere formstabil, festlegbar ist.

Wenn mindestens eines des mindestens einen Verankerungselements bei Überschreiten einer bestimmten Kraft quer zur seiner Längsrichtung flexibel biegbar ist, kann die Ankereinheit in einer gewählten Formgebung verharren, auch wenn Vergussmasse an der Ankereinheit vorbeiströmt und/oder wenn eine Person die Ankereinheit unbeabsichtigt berührt.

Die bestimmte Kraft umfasst vorzugsweise eine Kraft, die durch eine Person manuell übertragbar ist und die größer ist, als eine durch Einfüllen von Vergussmasse auf das Verankerungselement übertragene Kraft.

Grundsätzlich ist es denkbar, dass mindestens eines des mindestens einen Verankerungselements derart gebogen ist, dass es in Gänze unterhalb eines Bewehrungsmittels anordenbar ist. Bei Ausführungsformen der Ankereinheit erweist es sich als vorteilhaft, wenn mindestens eines des mindestens einen Verankerungselements - quer zur freien Oberfläche des Bauwerkelements betrachtet - das mindestens eine Bewehrungsmittel durch eine Öffnung des mindestens einen Bewehrungsmittels oder durch einen bewehrungsmittelfreien Zwischenraum des Bauwerkelements überlappt oder durchgreift.

Der Ankerkopf kann quer zur freien Oberfläche eine Höhe von 1 bis 5 cm, insbesondere 1,5 bis 4 cm, insbesondere 1,5 bis 2,5 cm umfassen. Mindestens eines des mindestens einen Verankerungselements kann bezüglich seiner Längserstreckung eine derartige Länge umfassen, dass es mindestens die am weitesten zur freien Oberfläche liegende Ebene des Bewehrungsmittels durchragt.

Darüber hinaus sind Ausführungsformen der Ankereinheit denkbar, bei denen mindestens eines des mindestens einen Verankerungselements lösbar, insbesondere mittels Verschrauben, oder unlösbar, insbesondere mittels Verschweißen, Löten, Nieten oder Verkleben, am Ankerkopf festgelegt ist.

Wenn mindestens eines des mindestens einen Verankerungselements lösbar, insbesondere mittels Verschrauben, am oder im Ankerkopf festgelegt ist, können Ankereinheiten mit ein und demselben Ankerkopf mit jeweils unterschiedlichen Verankerungselementen ausgestattet werden. Hierdurch ist die Ankereinheit bezüglich der zu erwartenden aufzunehmenden Last an die jeweilige Einbauposition anpassbar.

Wenn mindestens eines des mindestens einen Verankerungselements unlösbar, insbesondere mittels Verschweißen, Löten, Nieten oder Verkleben, am oder im Ankerkopf festgelegt ist, ist die Ankereinheit zumindest partiell vormontierbar ausbildbar.

Bei einer Weiterbildung der Ankereinheit erweist es sich als vorteilhaft, wenn mindestens eines des mindestens einen Verankerungselements einen Draht oder einen Stab mit einem Durchmesser von 1 mm bis 4mm, insbesondere von 2 mm bis 2,5 mm, und einer Länge von 30 mm bis 150 mm, insbesondere 100 mm, umfasst.

Grundsätzlich ist es denkbar, dass mindestens eines des mindestens einen Verankerungselements ausschließlich durch seine form- und/oder kraftschlüssige Anordnung innerhalb des Bauwerkselements Kräfte und Lasten aufnehmen kann. Um eine Lastaufnahme der Ankereinheit weiter zu verbessern, umfasst die Ankereinheit mindestens ein Tellermittel, das an einem dem Ankerkopf gegenüberliegenden Ende mindestens eines des mindestens einen Verankerungselements angeordnet ist und das quer zur Längsrichtung des Verankerungselements einen Durchmesser umfasst, der größer ist, als der Durchmesser des Verankerungselements.

Durch das Tellermittel wird ein zusätzlicher Formschluss, insbesondere ein Hintergriff, der Ankereinheit mit dem Bauwerkselement erzielt, wodurch die durch die Ankereinheit aufnehmbaren Lasten weiter gesteigert sind.

Bei Weiterbildung letztgenannter Ausführungsform erweist es sich als vorteilhaft, wenn das Tellermittel am Verankerungselement starr festgelegt ist und/oder wenn das Tellermittel am Verankerungselement lösbar oder unlösbar festgelegt ist
Grundsätzlich ist es denkbar, dass die Ankereinheit ein einziges Verankerungselement umfasst. Bei einem Ausführungsbeispiel der Ankereinheit erweist es sich als vorteilhaft, wenn die Ankereinheit mindestens zwei Verankerungselemente umfasst, die am Ankerkopf festgelegt sind und an denen jeweils ein Tellermittel an dem dem Ankerkopf abgewandten Ende angeordnet sind.

Wenn die Ankereinheit mehrere Verankerungselement umfasst, können diese symmetrisch am Ankerkopf angeordnet sein. Ferner können diese an einer beliebigen Stelle des Ankerkopfs festgelegt sein, beispielsweise an einer der freien Oberfläche abgewandten und gegenüberliegenden Oberfläche oder an einer Seitenfläche.

Um Installationsmittel, wie Kabel oder Luftführungen an der Bauwerkseinrichtung festzulegen, erweist es sich als vorteilhaft, wenn die Aufnahme des Ankerkopfs einen Innengewindeabschnitt, in dem das Festlegemittel mit einem Außengewindeabschnitt festlegbar ist, und/oder mindestens einen quer zur Einführrichtung ausgebildeten Hintergriffabschnitt umfasst, in den das Festlegemittel mit einem Vorsprungabschnitt, einen Hintergriff bildend festlegbar ist.

Solchenfalls kann über das Festlegemittel auf einfache Weise eine Installationseinheit, wie Kabelführung, Luftführung oder Dergleichen, durch die Ankereinheit an der Bauwerkseinrichtung festgelegt werden.

Wenn die Aufnahme des Ankerkopfs einen Innengewindeabschnitt umfasst, kann das Festlegemittel in dem Innengewindeabschnitt mit seinem Außengewindeabschnitt eingeschraubt werden.

Wenn die Aufnahme einen quer zur Einführrichtung ausgebildeten Hintergriffabschnitt umfasst, kann das Festlegemittel auf einfache Weise mittels Verklipsen oder durch Bajonettverschluss in der Aufnahme festgelegt werden.

Um die mögliche Lastaufnahme durch die Ankereinheit weiter zu erhöhen, erweist es sich als vorteilhaft, wenn der Ankerkopf quer zur freien Oberfläche des Bauwerkelements einen Oberflächenabschnitt mit erhöhter Oberflächenrauigkeit umfasst, der eine Vielzahl von Erhebungen und Vertiefungen umfasst, insbesondere, wenn der Oberflächenabschnitt mit erhöhter Oberflächenrauigkeit einen Außengewindeabschnitt und /oder einen Abschnitt mit Rändelung umfasst.

Hierdurch ist ein Reibschluss, bzw. ein Formschluss zwischen Ankerkopf und Bauwerkselement steigerbar und die durch die Ankereinheit aufnehmbaren Lasten sind erhöht.

Um zu gewährleisten, dass die Ankereinheit beim Bilden der Bauwerkseinrichtung, insbesondere beim Umfließen durch Vergussmasse, ortsfest angeordnet ist, umfasst ein Ausführungsbeispiel der Ankereinheit mindestens ein Positionierungselement, das an einer Verschalung, auf die die Vergussmasse, wie Beton, des Bauwerkselements der Bauwerkseinrichtung zum Herstellen des Bauwerkelements gießbar ist, festlegbar ist und durch das der Ankerkopf gegen ein Bewegen parallel zur Oberfläche der Verschalung festgelegt ist.

Das Positionierungselement kann beispielsweise an der Verschalung unlösbar festgelegt sein, beispielsweise mittels Verkleben, Nageln, Verschrauben, Nieten. Das Positionierungselement kann, wenn die Vergussmasse ausgehärtet ist und das Bauwerkselement bildet, gemeinsam mit der Verschalung entfernbar sein, wodurch der Ankerkopf mit seiner Aufnahme von außen zugänglich ist. Solchenfalls kann das Positionierungselement ortsfest an der Verschalung zumindest bis zum Aushärten der Vergussmasse, insbesondere bis zum Ende des eines Abbindeprozesses, wenn die Vergussmasse Beton umfasst, festgelegt sein
Ferner kann das Positionierungselement nach dem Entfernen am Ankerkopf verbleiben.

Darüber hinaus kann das Ankerelement reib- oder kraftschlüssig in der Aufnahme des Ankerkopfs angeordnet werden. Hierdurch muss zum Bewegen des Ankerkopf quer zur Oberfläche der Verschalung eine Lösekraft erreicht oder überschritten werden. Die Lösekraft liegt in einem Bereich oberhalb der zu erwartenden beim Aushärten der Vergussmasse oder unbeabsichtigten Berühren zu erwartenden Kräfte. Die Lösekraft liegt in einem Bereich, der ein manuelles Lösen des Positionierungselements von dem Ankerkopf erlaubt.

Es erweist sich als vorteilhaft, wenn das Positionierungselement ein Zapfenelement umfasst, auf dem der Ankerkopf mit der Aufnahme, das Zapfenelement aufnehmend, anordenbar ist, wobei das Zapfenelement einen zur Aufnahme korrespondierend, insbesondere komplementär, ausgebildeten Querschnitt umfasst, und/oder wenn das Positionierungselement auf einer der Verschalung abgewandten Seite einen Aufnahmebereich umfasst, in dem der Ankerkopf lösbar anordenbar ist.

Das Zapfenelement kann ein elastisch komprimierbares Material, insbesondere, einen Kunststoff, umfassen.

Bei einer Weiterbildung kann das Zapfenelement auf einem Scheibenelement angeordnet sein, auf dem das Zapfenelement festgelegt ist, und an dem der Ankerkopf mit einer die Aufnahme umfassenden Stirnseite aufliegt. Das Scheibenelement kann ein transparentes Material umfassen, wie Kunststoff, wodurch ein Positionieren an der Verschalung erleichtert ist.

Der Aufnahmebereich kann beispielsweise eine Vertiefung im Positionierungselement umfassen, in die der Ankerkopf einsteckbar ist. Die Vertiefung kann einen zum Ankerkopf korrespondierend, insbesondere komplementär, ausgebildeten Querschnitt umfassen. Solchenfalls kann das Positionierungselement lochscheiben- oder hülsenartig ausgebildet sein.

Wenn das Positionierungselement ein Zapfenelement umfasst, kann dieser reib- oder kraftschlüssig in der Aufnahme des Ankerkopfs angeordnet sein, wodurch der Ankerkopf zumindest gegen ein Bewegen parallel zur Oberfläche der Verschalung festgelegt ist. Wenn das Zapfenelement ein elastisch komprimierbares Material umfasst, ist hierdurch beim Anordnen des Zapfenelements in der Aufnahme des Ankerkopfs auf einfache Weise ein Reib- oder Kraftschluss ausbildbar, wodurch der Ankerkopf bis zum Erreichen oder Überschreiten einer Lösekraft gegen ein Bewegen quer zur Verschalung gehalten ist.

Es ist denkbar, dass bei einer Bauwerkseinrichtung mehrere Ankereinheiten verbaut werden. Hierbei können unterschiedlichen Ankereinheiten unterschiedliche Funktionalitäten zugeordnet sein. Beispielsweise kann an einer Ankereinheit ein Kabel oder eine Leitung befestigt werden und an einer weiteren Ankereinheit eine Luftführung oder Dergleichen. Um ein Verwalten und Zuordnen einer Ankereinheit zu erleichtern, erweist es sich als vorteilhaft, wenn die Ankereinheit mindestens ein optisch, elektronisch oder magnetisch wahrnehmbares Informationselement, wie Strichcode oder RFID-Chip umfasst, das an einer der freien Oberfläche des Bauwerkselements zugewandten Oberfläche angeordnet oder identifizierbar ist, durch das Informationen in einer Recheneinheit zuordenbar sind und durch das eine Ankereinheit von anderen Ankereinheiten unterscheidbar ist.

Wenn das Informationselement einen Strichcode umfasst, kann dieser im eingebauten Zustand der Ankereinheit optisch erfasst werden. Unter Zuhilfenahme beispielsweise eines Scanners kann solchenfalls eine Ankereinheit eingescannt und einer Funktion zugewiesen werden. Wenn die Ankereinheit einen RFID-Chip umfasst, können die zuvor beschriebenen Tätigkeiten auch elektronisch oder magnetisch durchgeführt werden. Ferner kann solchenfalls die Ankereinheit auch dann identifiziert oder zugeordnet werden, wenn keine unmittelbar freie optische Sichtstrecke vorhanden ist.

Darüber hinaus wird die Aufgabe gelöst durch eine Bauwerkseinrichtung, wie Decke, mit mindestens einem aus einer Vergussmasse, wie Beton, hergestellten Bauwerkselement, mit mindestens einem Bewehrungsmittel, das innerhalb des Bauwerkselements angeordnet ist, und mit mindestens einer Ankereinheit mit mindestens einem der zuvor genannten Merkmale, die in Gänze oder zumindest abschnittsweise im Bauwerkselement angeordnet und unlösbar festgelegt ist, wobei die Ankereinheit mindestens einen Ankerkopf aufweist, der zwischen einer freien Oberfläche des Bauwerkselement und dem Bewehrungsmittel angeordnet ist und der mindestens eine Aufnahme umfasst, die auf der Seite der freien Oberfläche des Bauwerkskörpers von außen zugänglich ist und in die ein Festlegemittel einführbar und darin festlegebar ist, und wobei die Ankereinheit mindestens ein stab- oder drahtförmiges Verankerungselement umfasst.

Darüber hinaus wird die Aufgabe gelöst durch ein Verfahren zum Herstellen einer Bauwerkseinrichtung mit mindestens einem der zuvor genannten Merkmale mit einer Ankereinheit mit mindestens einem der zuvor genannten Merkmale, gekennzeichnet durch die Schritte:
a. Auslegen einer Verschalung und Anordnen mindestens eines Bewehrungsmittels, das zur Verschalung beabstandet ist;
b. Anordnen mindestens einer Ankereinheit auf der Verschalung, wobei mindestens eines des mindestens einen Verankerungselements bei Überschreiten einer auf ihn wirkenden bestimmten Kraft quer zu seiner Längsrichtung flexibel biegbar und in einer Mehrzahl von gebogenen Anordnungen, insbesondere formstabil, festlegbar ist und/oder wobei mindestens eines des mindestens einen Verankerungselements bei einer mit dem Bewehrungsmittel überlappenden Anordnung an dem Bewehrungsmittel mittels Verbiegen vorbeigeführt wird;
c. Anordnen der Vergussmasse an der Verschalung;
d. Entfernen der Verschalung nach Aushärten der Vergussmasse.

Ferner erweist es sich als vorteilhaft, wenn nach Auslegen einer Verschalung und vor dem Anordnen des mindestens einen Bewehrungsmittels ein Positionierungselement an der Verschalung festgelegt wird und wenn das Anordnen der mindestens einen Ankereinheit auf der Verschalung ein Anordnen des Ankerkopfs im Aufnahmebereich des Positionierungselements umfasst.

Vor dem Anordnen des Positionierungselements kann ein Markieren der Lage der Ankereinheit auf der Verschalung erfolgen. Hierdurch kann die spätere Lage der Ankereinheit in der fertig gestellten Bauwerkeinrichtung genau vorgegeben werden.

Weitere Merkmale, Einzelheiten und Vorteile der Erfindung ergeben sich aus den beigefügten Patentansprüchen, aus der zeichnerischen Darstellung und nachfolgenden Beschreibung bevorzugter Ausführungsformen der Ankereinheit, der Bauwerkseinrichtung und des Verfahrens.

In der Zeichnung zeigt:
- Figur 1: Eine Schnittansicht durch ein erstes Ausführungsbeispiel der Bauwerkseinrichtung mit einer erfindungsgemäßen Ankereinheit;
- Figur 2: Eine Schnittansicht durch ein zweites Ausführungsbeispiel der Ankereinheit in einer Anordnung zum Bilden der Bauwerkseinrichtung;
- Figur 3: Eine Schnittansicht durch ein drittes Ausführungsbeispiel der Ankereinheit in einer Anordnung zum Bilden der Bauwerkseinrichtung;
- Figur 4: Eine Schnittansicht durch ein viertes Ausführungsbeispiel der Ankereinheit in einer Anordnung zum Bilden der Bauwerkseinrichtung;
- Figur 5: Ein schematisches Ablaufdiagramm eines Ausführungsbeispiels des Verfahrens.

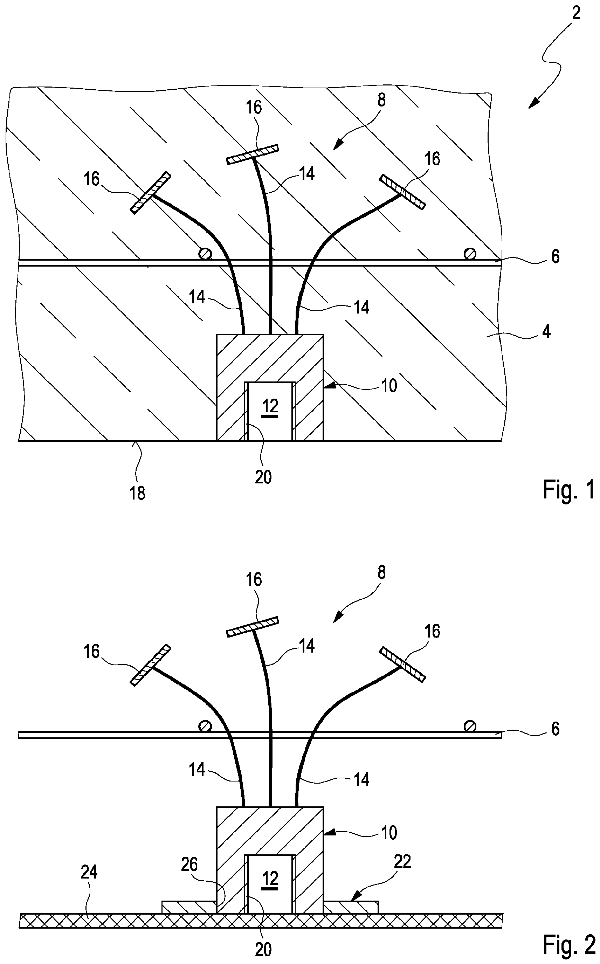

Figur 1 zeigt ein erstes Ausführungsbeispiel einer insgesamt mit dem Bezugszeichen 2 versehenen Bauwerkseinrichtung, wie Decke. Die Bauwerkseinrichtung 2 umfasst ein Bauwerkselement 4, das aus einer Vergussmasse, wie Beton, hergestellt ist. In dem Bauwerkselement 4 ist mindestens ein Bewehrungsmittel 6 angeordnet.

Darüber hinaus umfasst die Bauwerkseinrichtung 2 eine Ankereinheit 8, die in dem Bauwerkselement 4 unlösbar form- und/oder kraftschlüssig festgelegt ist. Die Ankereinheit 8 umfasst einen Ankerkopf 10, der mindestens eine von außen zugängliche Aufnahme 12 umfasst. In die Aufnahme 12 ist ein Festlegemittel einführbar und darin festlegbar.

Darüber hinaus zeigt das Ausführungsbeispiel gemäß Figur 1 die Ankereinheit 8 mit drei stab- oder drahtförmigen Verankerungselementen 14, die am Ankerkopf 10 festgelegt sind, die entlang ihrer Längsrichtung unelastisch und die quer zu ihrer Längsrichtung flexibel biegbar sind. An den Enden der Verankerungselemente 14, die dem Ankerkopf 10 gegenüberliegen, umfasst die Ankereinheit 8 Tellermittel 16.

Figur 1 zeigt die Bauwerkseinrichtung 2, bei der die Ankereinheit 8 zwischen einer freien Oberfläche 18 des Bauwerkselements 4 unter dem Bewehrungsmittel 6 angeordnet ist. Die Verankerungselemente 14 durchgreifen das Bewehrungsmittel 6 durch eine Öffnung in dem Bewehrungsmittel 6 oder durch einen bewehrungsfreien Zwischenraum im Bauwerkselement 4. Die Verankerungselemente 14 können solchenfalls das Bewehrungsmittel 6 beidseitig umgeben und in Gänze an diesen vorbeigeführt werden.

Bei dem in Figur 1 gezeigten Ausführungsbeispiel umfasst die Ankereinheit 8 im Bereich der Aufnahme 12 einen Innengewindeabschnitt 20, in dem das Festlegemittel mit einem Außengewindeabschnitt festlegbar ist.

Figur 2 zeigt ein zweites Ausführungsbeispiel der Ankereinheit 8, das ein Positionierungselement 22 umfasst. Das Positionierungselement 22 ist an einer Verschalung 24 ortsfest festgelegt. Auf die Verschalung 24 ist die Vergussmasse, wie Beton, des Bauwerkselements 4 aufgießbar, wodurch durch Aushärten der Vergussmasse das Bauwerkselement 4 gebildet wird.

Das Positionierungselement 22 umfasst auf einer der Verschalung 24 abgewandten Seite einen Aufnahmebereich 26, in dem der Ankerkopf 10 lösbar anordenbar und gegen ein Bewegen parallel zur Oberfläche der Verschalung 24 festgelegt ist.

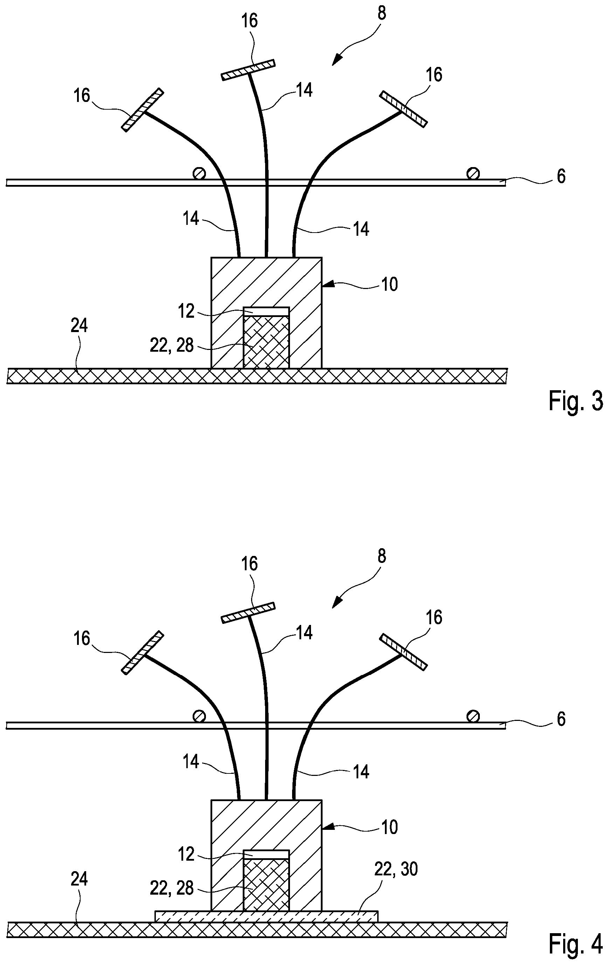

Figur 3 zeigt ein drittes Ausführungsbeispiel der Ankereinheit 8, bei dem das Positionierungselement 22 ein Zapfenelement 28 umfasst auf das der Ankerkopf 10 mit seiner Aufnahme 12 aufsteckbar und gegen ein Bewegen parallel zur Oberfläche der Verschalung 24 festgelegt ist.

Figur 4 zeigt ein viertes Ausführungsbeispiel der Ankereinheit 8, bei dem das Positionierungselement 22 ein Zapfenelement 28 und ein Scheibenelement 30 umfasst. Das Zapfenelement 28 ist am Scheibenelement 30 festgelegt und das Scheibenelement 30 an der Verschalung 24. Der Ankerkopf 10 ist mit seiner Aufnahme 12 auf das Zapfenelement aufsteckbar und gegen ein Bewegen parallel zur Oberfläche der Verschalung 24 festgelegt.

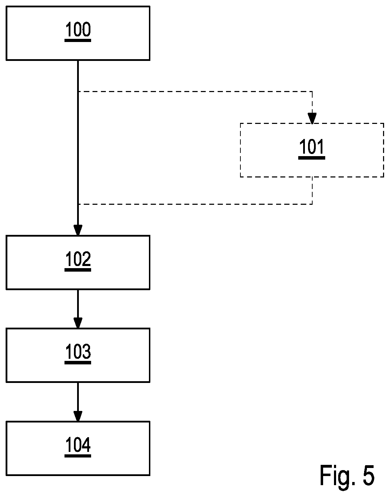

Figur 5 zeigt ein Ausführungsbeispiel eines erfindungsgemäßen Verfahrens zum Herstellen einer Bauwerkseinrichtung 2 gemäß Figur 1. Unter Zuhilfenahme der Darstellung gemäß Figur 2 wird das Verfahren nachfolgend beschrieben:

In einem ersten Schritt 100 wird eine Verschalung 24 ausgelegt sowie mindestens ein Bewehrungsmittel 6 angeordnet, wobei das Bewehrungsmittel 6 zur Verschalung 24 beabstandet ist. Hierbei kann die Lage der Bauwerkseinrichtung 2 z.B. durch Markierung des Mittelpunkts der Ankereinheit 8, auf die Verschalung 24 gebracht werden.

In einem nachfolgenden Schritt 102 wird mindestens eine Ankereinheit 8 auf der Verschalung 24 angeordnet, wobei mindestens eines des mindestens einen Verankerungselements 14 im Falle einer Kollision zwischen Verankerungselement und Bewehrungsmittel an dem Bewehrungsmittel 6 mittels Verbiegens vorbeigeführt werden kann.

Zwischen dem Schritt 100 und 102 kann ein Schritt 101 vorgesehen sein, bei dem ein Positionierungselement 22 an der Verschalung 24 festgelegt wird. Solchenfalls wird im Schritt 102 die Ankereinheit 8 mit dem Ankerkopf 10 in dem Aufnahmebereich 26 des Positionierungselements 22 angeordnet oder auf das Zapfenelement 28 des Positionierungselements 22 aufgesteckt.

Nach dem Anordnen der Ankereinheit 8 mittelbar oder unmittelbar an der Verschalung 24 wird in einem Schritt 103 Vergussmasse an der Verschalung 24 angeordnet. Dieses kann mittels Vergießens erfolgen.

Sobald die Vergussmasse ausgehärtet ist, wird in einem Folgeschritt 104 die Verschalung 24 entfernt. Mit dem Entfernen der Verschalung 24 kann auch das Positionierungselement 22 entfernt werden.

Die in der vorstehenden Beschreibung, in den Ansprüchen sowie in der Zeichnung offenbarten Merkmale der Erfindung, können sowohl einzeln, als auch in jeder beliebigen Kombination bei der Verwirklichung der Erfindung in ihren verschiedenen Ausführungsformen wesentlich sein.

### Bezugszeichenliste

- 2: Bauwerkseinrichtung
- 4: Bauwerkselement
- 6: Bewehrungsmittel
- 8: Ankereinheit
- 10: Ankerkopf
- 12: Aufnahme
- 14: Verankerungselement
- 16: Tellermittel
- 18: freie Oberfläche
- 20: Innengewindeabschnitt
- 22: Positionierungselement
- 24: Verschalung
- 26: Aufnahmebereich
- 28: Zapfenelement
- 30: Scheibenmittel

- 100-104: Verfahrensschritte

## Patentansprüche

1. Ankereinheit (8), die in einer Bauwerkseinrichtung (2), wie Decke, in Gänze oder zumindest abschnittweise in einem aus einer Vergussmasse, wie Beton, hergestellten Bauwerkselement (4) der Bauwerkseinrichtung (2) unlösbar form- und/oder kraftschlüssig festlegbar oder festgelegt ist, mit mindestens einem Ankerkopf (10), der mindestens eine von außen zugängliche Aufnahme (12) umfasst, in die ein Festlegemittel einführbar und darin festlegebar ist, und mit mindestens einem stab- oder drahtförmigen Verankerungselement (14), das am Ankerkopf (10) festgelegt ist, das entlang seiner Längsrichtung unelastisch und quer zu seiner Längsrichtung flexibel biegbar ist, wobei der Ankerkopf (10) im unlösbar angeordneten Zustand zwischen einer freien Oberfläche (18) des Bauwerkselements (4) und mindestens einem im Bauwerkselement (4) angeordneten Bewehrungsmittel (6) angeordnet und die Aufnahme (12) von außen frei zugänglich ist.

2. Ankereinheit (8) nach Anspruch 1, **dadurch gekennzeichnet, dass** mindestens eines des mindestens einen Verankerungselements (14) bei Überschreiten einer bestimmten Kraft quer zu seiner Längsrichtung flexibel biegbar und in einer Mehrzahl von gebogenen Anordnungen, insbesondere formstabil, festlegbar ist.

3. Ankereinheit (8) nach Anspruch 1 oder 2, **dadurch gekennzeichnet, dass** mindestens eines des mindestens einen Verankerungselements (14) - quer zur freien Oberfläche (18) des Bauwerkelements (4) betrachtet - das mindestens eine Bewehrungsmittel (6) durch eine Öffnung des mindestens einen Bewehrungsmittels (6) oder durch einen bewehrungsmittelfreien Zwischenraum des Bauwerkelements (4) überlappt oder durchgreift.

4. Ankereinheit (8) nach einem der vorhergehenden Ansprüche, **dadurch gekennzeichnet, dass** mindestens eines des mindestens einen Verankerungselements (14) lösbar, insbesondere mittels Verschrauben, oder unlösbar, insbesondere mittels Verschweißen, Löten, Nieten oder Verkleben, am oder im Ankerkopf (10) festgelegt ist.

5. Ankereinheit (8) nach einem der vorhergehenden Ansprüche, **dadurch gekennzeichnet, dass** mindestens eines des mindestens einen Verankerungselements einen Draht oder einen Stab mit einem Durchmesser von 1 mm bis 4mm, insbesondere von 2 mm bis 2,5 mm, und einer Länge von 30 mm bis 150 mm, insbesondere 100 mm, umfasst

6. Ankereinheit (8) nach einem der vorhergehenden Ansprüche, **gekennzeichnet durch** mindestens ein Tellermittel (16), das an einem dem Ankerkopf (10) gegenüberliegenden Ende mindestens eines des mindestens einen Verankerungselements (14) angeordnet ist und das quer zur Längsrichtung des Verankerungselements (14) einen Durchmesser umfasst, der größer ist, als der Durchmesser des Verankerungselements (14).

7. Ankereinheit (8) nach Anspruch 6, **dadurch gekennzeichnet, dass** das Tellermittel (16) am Verankerungselement (14) starr festgelegt ist und/oder dass das Tellermittel (16) am Verankerungselement (14) lösbar oder unlösbar festgelegt ist.

8. Ankereinheit (8) nach einem der vorhergehenden Ansprüche, **gekennzeichnet durch** mindestens drei Verankerungselemente (14), die am Ankerkopf (10) festgelegt sind und an denen jeweils ein Tellermittel (16) an dem Ankerkopf (10) abgewandten Ende angeordnet sind.

9. Ankereinheit (8) nach einem der vorhergehenden Ansprüche, **dadurch gekennzeichnet, dass** die Aufnahme (12) des Ankerkopfs (10) einen Innengewindeabschnitt (20), in dem das Festlegemittel mit einem Außengewindeabschnitt festlegbar ist, und/oder mindestens einen quer zur Einführrichtung ausgebildeten Hintergriffabschnitt umfasst, in den das Festlegemittel mit einem Vorsprungabschnitt, einen Hintergriff bildend festlegbar ist.

10. Ankereinheit (8) nach einem der vorhergehenden Ansprüche, **dadurch gekennzeichnet, dass** der Ankerkopf (10) auf einer quer zur freien Oberfläche (18) des Bauwerkelements (4) einen Oberflächenabschnitt mit erhöhter Oberflächenrauigkeit umfasst, der eine Vielzahl von Erhebungen und Vertiefungen umfasst, insbesondere, dass der Oberflächenabschnitt mit erhöhter Oberflächenrauigkeit einen Außengewindeabschnitt und /oder einen Abschnitt mit Rändelung umfasst.

11. Ankereinheit (8) nach einem der vorhergehenden Ansprüche, **gekennzeichnet durch** mindestens ein Positionierungselement (22), das an einer Verschalung (24), auf die die Vergussmasse, wie Beton, des Bauwerkselements (4) der Bauwerkseinrichtung (2) zum Herstellen des Bauwerkelements (4) gießbar ist, festlegbar ist und durch das der Ankerkopf (10) gegen ein Bewegen parallel zur Oberfläche der Verschalung (24) festgelegt ist.

12. Ankereinheit nach Anspruch 11, **dadurch gekennzeichnet, dass** das Positionierungselement (22) ein Zapfenelement (28) umfasst, auf das der Ankerkopf (10) mit der Aufnahme (12), das Zapfenelement (28) aufnehmend anordenbar ist, wobei das Zapfenelement (28) einen zur Aufnahme (12) korrespondierend, insbesondere komplementär, ausgebildeten Querschnitt umfasst, und/oder dass das Positionierungselement (22) auf einer der Verschalung (24) abgewandten Seite einen Aufnahmebereich (26) umfasst, in dem der Ankerkopf (10) lösbar anordenbar ist.

13. Ankereinheit (8) nach einem der vorhergehenden Ansprüche, **gekennzeichnet durch** mindestens ein optisch, elektronisch oder magnetisch wahrnehmbares Informationselement, wie Strichcode oder RFID-Chip, das an einer der freien Oberfläche (18) des Bauwerkselements (4) zugewandten Oberfläche angeordnet oder identifizierbar ist, durch das Informationen in einer Recheneinheit zuordenbar sind und durch das eine Ankereinheit (8) von anderen Ankereinheiten (8) unterscheidbar ist.

14. Bauwerkseinrichtung (2), wie Decke, mit mindestens einem aus einer Vergussmasse, wie Beton, hergestellten Bauwerkselement (4), mit mindestens einem Bewehrungsmittel (6), das innerhalb des Bauwerkselements (4) angeordnet ist, und mit mindestens einer Ankereinheit (8) nach einem der Ansprüche 1 bis 13, die in Gänze oder zumindest abschnittsweise im Bauwerkselement (4) angeordnet und unlösbar festgelegt ist, wobei die Ankereinheit (8) mindestens einen Ankerkopf (10) aufweist, der zwischen einer freien Oberfläche (18) des Bauwerkselements (4) und dem Bewehrungsmittel (6) angeordnet ist und der mindestens eine Aufnahme (12) umfasst, die auf der Seite der freien Oberfläche (18) des Bauwerkskörpers von außen zugänglich ist und in die ein Festlegemittel einführbar und darin festlegebar ist, und wobei die Ankereinheit (8) mindestens ein stab- oder drahtförmiges Verankerungselement (14) umfasst.

15. Verfahren zum Herstellen einer Bauwerkseinrichtung (2) nach Anspruch 14 mit einer Ankereinheit (8) nach einem der Ansprüche 1 bis 13, **gekennzeichnet durch** die Schritte:
a. Auslegen einer Verschalung (24) und Anordnen mindestens eines Bewehrungsmittels (6), das zur Verschalung (24) beabstandet ist;
b. Anordnen mindestens einer Ankereinheit (8) auf der Verschalung (24), wobei mindestens eines des mindestens einen Verankerungselements (14) bei Überschreiten einer auf ihn wirkenden bestimmten Kraft quer zu seiner Längsrichtung flexibel biegbar und in einer Mehrzahl von gebogenen Anordnungen, insbesondere formstabil, festlegbar ist und/oder wobei mindestens eines des mindestens einen Verankerungselements (14) bei einer mit dem Bewehrungsmittel (6) überlappenden Anordnung an dem Bewehrungsmittel (6) mittels Verbiegen vorbeigeführt wird;
c. Anordnen der Vergussmasse an der Verschalung (24);
d. Entfernen der Verschalung (24) nach Aushärten der Vergussmasse.

16. Verfahren nach Anspruch 15, **dadurch gekennzeichnet, dass** nach Auslegen einer Verschalung (24) und dem Anordnen des mindestens einen Bewehrungsmittels (6) ein Positionierungselement (22) an der Verschalung (24) festgelegt wird und dass das Anordnen der mindestens einen Ankereinheit (8) auf der Verschalung (24) ein Anordnen des Ankerkopfs (10) im Aufnahmebereich (26) des Positionierungselements (22) umfasst.
